# EUROPÄISCHE PATENTSCHRIFT

(11) **EP 1 597 126 B1**
(45) Veröffentlichungstag und Bekanntmachung des Hinweises auf die Patenterteilung: **30.01.2008**
(21) Anmeldenummer: 04715247.5
(22) Anmeldetag: 27.02.2004
(51) Int. Cl.: B60T 13/14, B60T 15/04

(54) **BREMSSYSTEM**
BRAKING SYSTEM
SYSTEME DE FREINAGE

(30) Priorität: 28.02.2003 DE 10309139; 06.06.2003 DE 10325875
(43) Veröffentlichungstag der Anmeldung: 23.11.2005
(73) Patentinhaber: Bosch Rexroth AG, 70184 Stuttgart (DE)
(72) Erfinder: MIES, Hubertus, 97816 Lohr (DE)
(74) Vertreter: Winter, Brandl, Fürniss, Hübner Röss, Kaiser, Polte Partnerschaft Patent- und Rechtsanwaltskanzlei
(86) Internationale Anmeldenummer: PCT/DE2004/000368
(87) Internationale Veröffentlichungsnummer: WO 2004/076253

(56) Entgegenhaltungen:
- EP-A- 1 201 523
- WO-A-97/02964
- DE-A- 4 322 634
- DE-C- 4 212 032
- US-A- 3 918 765
- PATENT ABSTRACTS OF JAPAN vol. 1997, no. 10, 31. Oktober 1997 (1997-10-31) -& JP 09 142271 A (SAITAMA KIKI KK), 3. Juni 1997 (1997-06-03) in der Anmeldung erwähnt

## Beschreibung

Die Erfindung betrifft ein Bremssystem für eine mobile Arbeitsmaschine gemäß dem Oberbegriff des Patentanspruchs 1.

Schwere Fahrzeuge der Bau-, Land- und Forstwirtschaft sowie Sonderfahrzeuge werden häufig in schwierigem Gelände eingesetzt und müssen Bremssysteme besitzen, die bei niedrigen Bedienungskräften ein hohes Maß an Betriebssicherheit aufweisen. Die gesetzlichen Anforderungen an die Bremse können bei schweren Fahrzeugen nur mit einer Fremdkraftbremse erfüllt werden. In der Regel werden bei mobilen Arbeitsmaschinen, wie Baumaschinen oder Forstmaschinen, hydraulische Bremssysteme gegenüber pneumatisch wirkenden Systemen bevorzugt.

Ein Fahrzeug muss grundsätzlich mit einer Betriebsbremse, einer einer Hilfsbremse und einer Feststellbremse ausgerüstet sein. Die Betriebsbremse und die Hilfsbremse müssen dosierbar betrieben werden können. Bei der Feststellbremse, die in der Regel eine mit einem Handbremsventil invers betätigbare, sogenannte Federspeicherbremse ist, reicht eine schwarz-weiß Betätigung. Üblich ist es, zur Realisierung der Betriebsbremsfunktion und der Hilfsbremsfunktion ein Zweikreis-Bremssystem zu verwenden, bei dem die Radbremszylinder der Arbeitsmaschine über zwei hydraulische Bremskreise ansteuerbar sind. Die Bremsfunktion wird dabei in der Regel mittels eines Bremspedals betätigt, das auf ein Zweikreis-Bremsventil wirkt, wie es in der DE 43 22 634 A1 beschrieben ist. Das Bremsventil gemäß der bekannten Lösung hat zwei hintereinander angeordnete Regelkolben, über die jeweils ein Bremsdruckkanal mit einem an einen Hydrospeicher angeschlossenen Versorgungskanal oder einem Tankkanal verbindbar ist, so dass bei Betätigung des Pedals beide Regelkolben verschoben und ein entsprechender Bremsdruck in jedem der Bremskreise aufgebaut wird. Ein derartiges Zweikreisbremsventil kann auch mit einer hydraulischen Vorsteuerung gemäß der JP 9142271 versehen werden.

Obwohl bei dieser bekannten Lösung zwei Bremskreise vorgesehen sind, kann es trotzdem noch zu einem Bremsausfall kommen, wenn sich beispielsweise das Pedal nicht betätigen lässt (Stein liegt unter dem Pedal) oder wenn einer der beiden Regelkolben klemmt, so dass auch der andere Regelkolben nicht mehr verschiebbar ist. Fallen das Ventil oder das Pedal, also die Betriebsbremse und die Hilfsbremse aus, so steht nur noch die Feststellbremse als "Notbremse" zur Verfügung. Dies setzt voraus, dass die Feststellbremse entsprechend, beispielsweise als dynamisch wirkende Lamellenbremse im Antriebsstrang, ausgelegt ist.

Eine andere Lösung eines Zweikreis-Bremsventils, welches mit einem Bremspedal betätigt wird, ist in der US 3 918 765A aufgezeigt. Hierbei sind zwei Regelkolben parallel in einem gemeinsamen Ventilgehäuse angeordnet, über die zur Ansteuerung einer Radbremse jeweils ein Bremsdruckkanal mit einem Versorgungskanal oder einem Tankkanal verbindbar ist. Nachteilig bei dieser Lösung ist, dass es bei einem defekten Bremspedal zu einem kompletten Bremsausfall in beiden Bremskreisen kommt, außerdem ist ein derartiges Zweikreis-Bremsventil mit zwei Regelkolben in einem gemeinsamen Ventilgehäuse fertigungstechnisch sehr aufwendig.

Demgegenüber liegt der Erfindung die Aufgabe zugrunde, ein Bremssystem für eine mobile Arbeitsmaschine zu schaffen, bei dem die Ausfallsicherheit der Betriebsbremse und der Hilfsbremse mit minimalem vorrichtungstechnischen Aufwand erhöht ist.

Diese Aufgabe wird durch ein Bremssystem für eine mobile Arbeitsmaschine gemäß Patentanspruch 1 gelöst.

Erfindungsgemäß hat das Bremssystem zwei Bremskreise, denen jeweils zumindest ein Radbremszylinder zugeordnet ist. Jeder Bremskreis hat ein eigenes Bremsventil - beispielsweise ein Einkreis-Bremsventil, über das die zugeordneten Radbremszylinder mit Druckmittel beaufschlagbar sind.

Jedes Ventil ist über jeweils ein Bremspedal und eine hydraulische Vorsteuerung betätigbar, wobei jeweils der Druck stromabwärts des betätigten Bremsventils in den diesem zugeordneten Radbremszylinder und über einen Steuerkanal in einen Steuerraum des anderen Bremsventils geführt ist, womit beide Bremsventile mechanisch und hydraulisch ansteuerbar sind.

D.h., durch mechanische Betätigung des einen Bremsventils wird das andere Bremsventil hydraulisch angesteuert, wobei selbst dann, wenn der Regelkolben des anderen, hydraulisch betätigten Bremsventils blockiert, immer noch das erstgenannte Bremsventil betätigbar ist. Die Erfindung lässt sich ganz besonders vorteilhaft bei einem Bremssystem einsetzen, das mit zwei Bremspedalen - z.B. Radlader - ausgeführt ist. In diesem Fall ist die Betriebssicherheit auch dann gegeben, wenn ein Bremspedal, beispielsweise durch einen Stein, oder ein Regelkolben blockiert ist. Der Fahrer kann dann durch Betätigen des anderen Bremspedals beide (bei blockiertem Pedal) bzw. den anderen Bremskreis (bei blockiertem Regelkolben) ansteuern, so dass die Betriebsbremse und auch die Hilfsbremse mit minimalem vorrichtungstechnischen Aufwand realisiert sind. Die Notbremsung kann dann beispielsweise dadurch erfolgen, dass ein Notbremsschalter betätigt wird und dadurch beide Bremsventile mit einem hydraulischen Steuerdruck beaufschlagt werden, so dass die Radbremszylinder beider Achsen mit Druckmittel versorgt werden. Nach dem Abbremsen des Fahrzeuges blokkiert dann eine mechanische Einrichtung den Antriebsstrang.

Um unerwünschte Wechselwirkungen mit der mechanisch aufgebrachten Bremskraft (Pedalkraft) zu vermeiden, kann jedem Bremsventil ein Wegeventil zugeordnet werden, über das die Verbindung des Steuerraumes des einen, über das Pedal betätigten Ventils zum Bremsanschluss des anderen Ventils abgesperrt ist, so dass in dem Steuerraum des pedalbetätigten Ventils kein Steuerdruck aufgebaut wird.

Dieses Wegeventil kann beispielsweise durch ein Zweiwegeventil gebildet werden, dessen Kolben durch das Pedal oder einen vom Pedal betätigten Betätigungskolben in seine Sperrstellung verschoben wird.

Zur Realisierung einer Notbremse oder zum gezielten Abbremsen der Arbeitsmaschine bei bestimmten Betriebsbedingungen - unabhängig von der Betätigung eines Pedals - werden die Bremsventile mit einem zusätzlichen Vorsteueranschluss versehen, über den die Bremsventile mit einem externen Steuerdruck beaufschlagbar sind, um deren Regelkolben in ihre Regelposition zu verfahren.

Dieser externe Vorsteuerdruck wird bei einem bevorzugten Ausführungsbeispiel über ein Druckreduzierventil gesteuert, das in Vorsteuerleitungen zu den Vorsteueranschlüssen der beiden Bremsventile vorgesehen ist.

Bei einem bevorzugten Ausführungsbeispiel der Erfindung wird der über das Pedal verschobene Betätigungskolben zweiteilig mit einem Hauptkolben und einem darin geführten Vorsteuerkolben ausgeführt. Der vorgenannte externe Vorsteuerdruck wirkt auf die vergleichsweise große Stirnfläche des Hauptkolbens, während der kleinere Vorsteuerkolben mit dem Druck beaufschlagbar ist, der am Bremsanschluss des jeweils anderen Bremsventils wirksam ist.

Die Anbindung eines vom Steuerkolben begrenzten Steuerraumes an den Steueranschluss erfolgt vorzugsweise über Mantelbohrungen des Hauptkolbens, die über eine Ringnut mit dem Steueranschluss verbunden sind. Durch geeignete Wahl der Axiallänge der Ringnut kann am Außenumfang des Hauptkolbens eine Steuerkante ausgebildet werden, über die die Verbindung zum Steueranschluss bei Betätigung des Hauptkolbens mittels des Pedals zusteuerbar ist. D.h., bei dieser Lösung wird das vorgenannte Wegeventil praktisch durch Zusammenwirken einer Steuerkante des Hauptkolbens mit einem zum Steueranschluss führenden Kanal gebildet.

Die hydraulische Anbindung des von der größeren Stirnfläche des Hauptkolbens begrenzten Vorsteuerraumes erfolgt vorzugsweise durch den Hauptkolben hindurch, so dass das den Hauptkolben aufnehmende Vorsteuergehäuse sehr einfach ausgeführt ist.

Ein vom Pedal verschiebbarer Betätigungspin ist vorzugsweise mit Spiel im Betätigungskolben gelagert.

Der Betätigungskolben bzw. der Hauptkolben und der Vorsteuerkolben, sind über eine Regelfederanordnung in ihre Grundposition vorgespannt. Der die Regelfederanordnung aufnehmende Federraum wird bei einem bevorzugten Ausführungsbeispiel zum Tank hin entlastet.

Sonstige vorteilhafte Weiterbildungen der Erfindung sind Gegenstand weiterer Unteransprüche.

Im folgenden werden bevorzugte Ausführungsbeispiele der Erfindung anhand schematischer Zeichnungen näher erläutert. Es zeigen:
Figur 1 ein Schaltschema eines erfindungsgemäßen Bremssystems für eine hydraulische Arbeitsmaschine, beispielsweise einen Radlader;
Figur 2 einen Schnitt durch einen Kopf eines Bremsventils des Bremssystems aus Figur 1 und
Figur 3 einen Schnitt durch einen Kopf eines weiteren Ausführungsbeispieles eins Bremsventils.

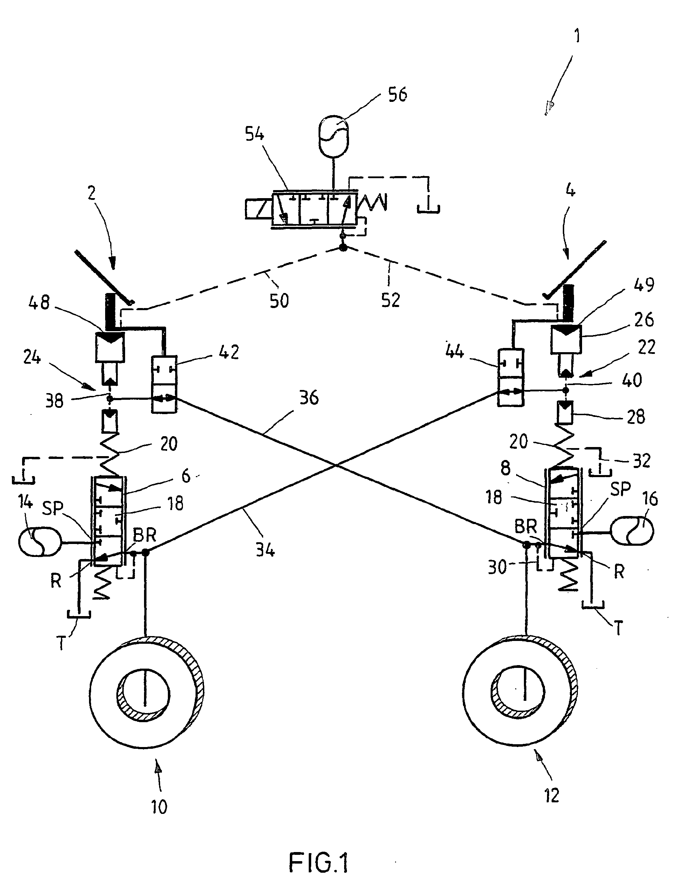

Figur 1 zeigt ein Schaltschema eines Bremssystems 1 für eine hydraulische Arbeitsmaschine, beispielsweise für einen Radlader. Dieser ist mit zwei Bremspedalen ausgeführt. Über die Bremspedale 2, 4 lässt sich jeweils ein Bremsventil 6 bzw. 8 betätigen, an deren Bremsanschluss BR Radzylinder 10, 12 (schematisch angedeutet in Figur 1) angeschlossen sind, so dass beispielsweise über das Bremsventil 6 die Radbremszylinder 10 der Vorderachse und über das Bremsventil 8 die Radbremszylinder 12 der Hinterachse ansteuerbar sind.

Wie im folgenden noch näher ausgeführt wird, werden bei Betätigung eines der beiden Bremspedale 2, 4 beide Bremsventile 6, 8 mechanisch bzw. hydraulisch angesteuert, so dass auch entsprechend die Radbremszylinder 10, 12 zum Einrücken der Bremsen mit Druckmittel versorgt werden. Es handelt sich somit im Prinzip um ein Zweikreis-Bremssystem, bei dem jedoch anstelle eines herkömmlichen Tandemventils (Zweikreis-Bremsventil) zwei vergleichsweise einfachere Ventile benutzt werden, wie sie beispielsweise bei Einkreis-Bremssystemen eingesetzt werden.

Die Bremsventile 6, 8 haben neben dem erwähnten Bremsanschluss BR einen jeweils mit einem Hydrospeicher 14, 16 verbundenen Speicheranschluss SP sowie einen mit einem Tank T verbundenen Tankanschluss R.

Ein Regelkolben 18 der Bremsventile 6, 8 ist über eine Federanordnung in eine Grundposition vorgespannt, in der der Bremsanschluss BR mit dem Tankanschluss T verbunden ist, so dass die Radbremszylinder mit keinem Bremsdruck beaufschlagt sind. Der Regelkolben 18 ist dabei durch eine Regelfederanordnung 20 in einer Richtung beaufschlagt, in der die Verbindung vom Bremsanschluss BR zum Tankanschluss R zugesteuert wird. Die Spannung der Regelfederanordnung 20 lässt sich durch eine Betätigungseinrichtung 22, 24 verändern, die in Wirkverbindung mit dem zugeordneten Bremspedal 2 bzw. 4 steht. Jede Betätigungseinrichtung 22, 24 hat einen Hauptkolben 26 und einen Steuerkolben 28, die an der Regelfederanordnung 22 abgestützt sind. Demzufolge kann der Regelkolben 18 durch Betätigung des Bremspedals 2, 4 und entsprechende Verschiebung des Hauptkolbens 26 aus seiner dargestellten Grundposition nach unten (Ansicht nach Figur 1) verschoben werden, um einen Bremsvorgang einzuleiten. Der am Bremsanschluss BR anliegende Bremsdruck wirkt über eine Steuerleitung 30 jeweils auf eine in Schließrichtung (Verbindung BR mit R) wirksame Steuerfläche des Bremsventils 6, 8, während ein die Regelfederanordnung 20 aufnehmender Federraum über eine Tankleitung 32 mit Lecköl verbunden ist. Der am Bremsanschluss BR eines Bremsventils 6, 8 anliegende Bremsdruck wird jeweils über eine Steuerleitung 34 bzw. 36 in einen Steuerraum 38 bzw. 40 des jeweils anderen Bremsventils 8, 6 gemeldet, so dass der Steuerkolben 28 durch diesen Steuerdruck im Steuerraum 38 bzw. 40 in Richtung einer Erhöhung der Federspannung beaufschlagt ist. Bei diesem Ausführungsbeispiel ist jedem Bremsventil 6, 8 noch ein Zweiwegeventil 42, 44 zugeordnet, über das bei Betätigung eines Bremspedals 2, 4 die Verbindung zwischen dem Steuerraum 38, 40 des über das Bremspedal 2, 4 betätigten Bremsventils mit dem Bremsanschluss BR des jeweils anderen Bremsventils 6, 8 geschlossen werden kann. Dadurch wird verhindert, dass die über das Bremspedal 2, 4 aufgebrachte mechanische Kraft vom Vorsteuerdruck in der zugehörigen Steuerleitung 34, 36 überlagert ist.

Bei Betätigung beispielsweise des Bremspedals 2 wird zunächst der Hauptkolben 26 mit dem Vorsteuerkolben 28 nach unten (Figur 1) geschoben und somit die Regelfederanordnung 20 vorgespannt. Gleichzeitig wird das Wegeventil 42 in seine Sperrstellung gebracht, so dass der Steuerkanal 36 zum Bremsanschluss BR des anderen Bremsventils 8 abgesperrt ist. Durch die erhöhte Vorspannung der Regelfederanordnung 20 wird der Regelkolben 18 des Bremsventils 6 aus seiner Grundstellung heraus nach unten verschoben, und zunächst die Verbindung zwischen dem Bremsanschluss BR und dem Tankanschluss R zugesteuert und dann allmählich die Verbindung zwischen dem Speicheranschluss SP und dem Bremsanschluss BR aufgesteuert, so dass Druckmittel zu den Radbremszylindern 10 geführt wird. In Abhängigkeit von der Auslenkung des Bremspedals 2 stellt sich der Regelkolben 18 in eine Regelposition ein, die den an den Radbremszylindern 10 wirksamen Bremsdruck bestimmt - das Bremsventil 6 wirkt praktisch als Druckreduzierventil. Gleichzeitig wird der am Bremsanschluss BR wirksame Bremsdruck über die Steuerleitung 34 und das geöffnete Zweiwegeventil 44 in den Steuerraum 40 geführt. Dieser Steuerdruck wirkt in Richtung einer Vergrößerung der Spannung der Regelfederanordnung 20, so dass durch diesen Steuerdruck im Steuerraum 40 auch der Regelkolben 18 des Bremsventils 8 in eine Stellung verschoben wird, in der zunächst die Anschlüsse R, SP und BR geschlossen und dann die Verbindung zwischen dem Bremsanschluss BR und dem Speicheranschluss SP aufgesteuert wird. D.h., bei einer Betätigung des Bremspedals 2 wird durch die Überkreuzverbindung mittels der Steuerleitung 34 auch das dem anderen Bremspedal 4 zugeordnete Bremsventil 8 in seine Bremsposition verschoben, so dass auch die Radbremszylinder der anderen Achse mit Druckmittel versorgt werden. Beim Loslassen des Bremspedals 2 wird dieses durch die Rückstellkraft der unteren Zentrierfeder in Figur 1 und den in Schließrichtung in der Steuerleitung 30 wirksamen Steuerdruck und aufgrund der Entlastung der Regelfederanordnung 20 in seine dargestellte Grundposition zurückgefahren, wobei wieder zunächst die drei Anschlüsse R, SP, BR geschlossen und dann die Verbindung vom Bremsanschluss BR zum Tankanschluss R nach T aufgesteuert wird - der Bremsdruck wird in beiden Kreisen abgebaut.

Bei dem in Figur 1 dargestellten Ausführungsbeispiel ist noch eine zusätzliche Möglichkeit vorgesehen, um die beiden Bremsventile 6, 8 hydraulisch, d.h. ohne Betätigung eines der beiden Bremspedale 2, 4 anzusteuern. Dazu lassen sich von den Hauptkolben 26 abschnittsweise begrenzte Vorsteuerräume 48 bzw. 49 über Vorsteuerkanäle 50, 52 und ein Druckreduzierventil 54 mit einer weiteren Druckquelle verbinden, die vorliegend ein Hydrospeicher 56 ist. Bei dem dargestellten Ausführungsbeispiel wird das Druckreduzierventil 54 elektrisch aus einer Stellung, in der die beiden Vorsteuerkanäle 50, 52 mit Lecköl verbunden sind, in eine Stellung verschoben, in der diese beiden Kanäle 50, 52 mit dem weiteren Hydrospeicher 56 verbunden sind. Über das Druckreduzierventil 54 wird dessen Druck auf einen für die Ansteuerung des Bremssystems geeignetes Druckniveau, beispielsweise 25 bar vermindert. Anstelle einer elektrischen Ansteuerung des Druckmittelreduzierventils 54 könnte selbstverständlich auch eine hydraulische Ansteuerung vorgesehen werden. Bei Ansteuerung des Druckreduzierventils 54 werden die beiden Vorsteuerräume 48, 49 mit dem am Ausgang des Druckreduzierventils 54 wirksamen Druck beaufschlagt, so dass entsprechend beide Hauptkolben 26 ausgelenkt und die Regelfederanordnungen 20, 22 der Bremsventile 6, 8 gespannt und entsprechend der Regelkolben 18 dieser Bremsventile in ihre Regelposition gebracht werden, die von dem Druck am Ausgang des Druckreduzierventils 54 abhängt. D.h. je nach Einstellung des Druckredzierventils 54 kann eine vergleichsweise geringe Bremswirkung oder eine Vollbremsung eingestellt werden.

Die Besonderheit der vorbeschriebenen Lösung liegt darin, dass selbst dann, wenn eines der beiden Bremspedale 2, 4 blockiert ist, durch Betätigung des anderen Pedals noch alle Radbremszylinder 10, 12 ansteuerbar sind. D.h. die Hilfsbremse wird bei diesem System dadurch realisiert, dass der Fahrer die Möglichkeit hat, bei Blockieren eines Bremspedals 4 das zweite Bremspedal 2 zu betätigen und somit einen Bremsvorgang einzuleiten. Selbst bei Blockieren eines Regelkolbens 18 eines Bremszylinders 6 oder 8 ist noch eine hinreichende Bremswirkung gewährleistet, da der Fahrer dann die Hilfsbremse durch Betätigen des jeweils anderen Bremspedals aktivieren kann, so dass der zugehörige Bremskreis angesteuert wird. Die ebenfalls gesetzlich vorgeschriebene Notbremse lässt sich bei dem vorbeschriebenen Bremssystem 1 beispielsweise dadurch realisieren, dass das Druckreduzierventil 54 durch einen Notbremsschalter betätigt und somit die Radbremszylinder 10, 12 über beide Kreise mit Druckmittel versorgt werden. Es kann dann darauf verzichtet werden, im Antriebsstrang eine teure dynamische Bremse, beispielsweise eine Lamellenbremse vorzusehen. Es müsste dann nur noch eine mechanische Blockierung des Antriebsstranges vorgesehen werden, die dann einrückt, wenn die Notbremsung eingeleitet wird. Dieses Einrücken sollte allerdings erst dann erfolgen, wenn das Fahrzeug über das Bremssystem 1 zum Stillstand gebracht ist.

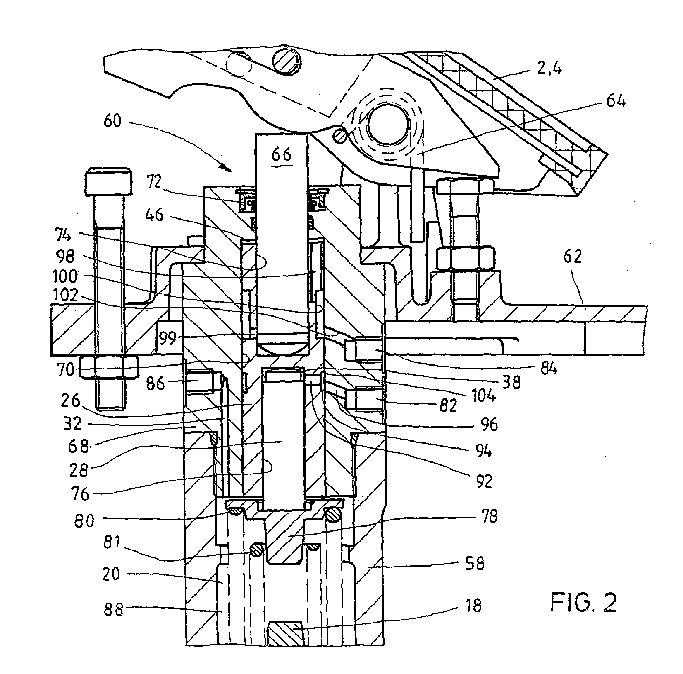

Figur 2 zeigt einen Schnitt durch ein Bremsventil 6, 8, wobei nur der Bereich dargestellt ist, in dem die Regelfederanordnung 20 und die Betätigungseinrichtung 22, 24 mit dem Bremspedal 2, 4 angeordnet ist. Auf die Darstellung des Regelkolbens 18 sowie des den Regelkolben aufnehmenden sowie die Anschlüsse BR, R, SP ausbildenden Ventilgehäuses wird verzichtet und auf den Stand der Technik verwiesen. In Figur 2 ist lediglich noch der obere Teil des Regelkolbens 18 bzw. eines an diesem abgestützten Federtellers dargestellt. Der Regelkolben 18 ist in einem Bremsventilgehäuse 58 geführt, auf das ein Bremsventilkopf 60 aufgesetzt ist.

Dieser hat eine Konsole 62, an der das Bremspedal 2, 4 schwenkbar gelagert ist. Das Bremspedal 2, 4 ist mittels einer Torsionsfeder 64 in seine durch einen Anschlag bestimmte Grundstellung vorgespannt. Der Bremsventilkopf 60 hat des weiteren einen Betätigungspin 66, der an der Unterseite des Bremspedals 2, 4 abgestützt ist und durch dieses in der Darstellung gemäß Figur 2 nach unten verschoben wird. Der Betätigungspin 66 ist in einem Vorsteuergehäuse 68 axial verschiebbar geführt, das in das Bremsventilgehäuse 58 eingeschraubt ist. Das Vorsteuergehäuse 68 hat eine Axialbohrung 70, die sich von einem Führungsabschnitt mit Dichtungen 72 und einer Gleitführung für den Betätigungspin 66 nach unten hin zu einer Aufnahmebohrung für einen Hauptkolben 26 erweitert. Der Hauptkolben 26 hat eine Sacklochbohrung 74, in die der Betätigungspin 66 gleitend, d.h. mit Spiel eintaucht. In der Grundposition ist die untere Stirnfläche des Befestigungspins 66 an der Stirnfläche der Sacklochbohrung 74 abgestützt. An dem vom Betätigungspin 66 entfernten Endabschnitt des Hauptkolbens 26 ist eine ebenfalls als Sackloch ausgebildete Führungsbohrung 76 vorgesehen, in der der Steuerkolben 28 axial verschiebbar geführt ist. Der in Figur 2 untere Endabschnitt des Steuerkolbens 28 steht aus dem Hauptkolben 26 hervor und liegt an einem Federteller 78 an, der seinerseits an der unteren Stirnfläche des Vorsteuergehäuses 68 abgestützt ist. Auch die untere Stirnfläche des Hauptkolbens 26 liegt an diesem Federteller 78 an. Beim dargestellten Ausführungsbeispiel hat die Regelfederanordnung 20 eine äußere Regelfeder 80, auf der der Federteller 78 aufliegt und eine koaxial dazu angeordnete innen liegende Regelfeder 81, die erst nach einem vorbestimmten Axialhub des Federtellers 78 und damit des Hauptkolbens 26 bzw. des Steuerkolbens 28 in Anlage an den Federteller 78 gelangt, so dass dann eine höhere Federrate wirksam ist.

Am Vorsteuergehäuse 68 sind des weiteren ein Steueranschluss 82, ein Vorsteueranschluss 84 sowie ein Tankanschluss 86 vorgesehen. Der Tankanschluss 86 ist über die im Vorsteuergehäuse 68 ausgebildete Tankleitung 32 mit einem die Regelfederanordnung 20 aufnehmenden Federraum 88 verbunden, so dass dieser zum Tank hin druckentlastet ist.

Zwischen der in Figur 2 oben liegenden Stirnfläche des Steuerkolbens 28 und dem Boden der Führungsbohrung 76 ist ein Steuerraum 90 in Axialrichtung begrenzt, der über eine Radialbohrung 92 und eine Ringnut 94 des Hauptkolbens 26 sowie eine Schrägbohrung 96 im Vorsteuergehäuse 68 mit dem Steueranschluss 82 verbunden ist.

Ein von der in Figur 2 oberen Stirnfläche des Hauptkolbens 26 begrenzter Vorsteuerraum 46 ist über eine Längsbohrung 98 sowie eine sich daran anschließende Umfangsnut 100 des Hauptkolbens 26 und eine weitere Schrägbohrung 102 im Vorsteuergehäuse 68 mit dem Vorsteueranschluss 84 verbunden. Der Raum zwischen Betätigungspin 66 und Hauptkolben 26 ist über eine Querbohrung 99 mit der Umfangsnut 16 verbunden, so dass der Hauptkolben 26 an seinem gesamten Querschnitt mit dem Druck im Steuerraum 46 beaufschlagt ist.

Die Axiallänge der dem Steueranschluss 82 zugeordneten Ringnut 94 ist so gewählt, dass die Schrägbohrung 96 bei Axialverschiebung des Hauptkolbens 26 durch eine Steuerkante 104 zugesteuert wird. D.h. die Ringnut 94 mit der Steuerkante 104 des Hauptkolbens 26 bildet mit der Schrägbohrung 96 das in Figur 1 dargestellte Zweiwegeventil 42 bzw. 44 aus.

Bei einer normalen Bremsbetätigung (Betriebsbremse) wird das Bremspedal 2 nach unten ausgelenkt, so dass der Hauptkolben 26 über den Betätigungspin 66 gegen die Kraft der Regelfeder 80 nach unten verschoben wird. Nach einem vorbestimmten Hub läuft der Federteller 78 auf die innen liegende Regelfeder 81 auf, so dass die weitere Axialverschiebung des Hauptkolbens 26 gegen eine größere Federkraft erfolgt. Durch diese Axialverschiebung des Hauptkolbens 26 wird die Schrägbohrung 96 und damit der Steueranschluss 82 mittels der Steuerkante 104 zugesteuert, so dass der Steuerkanal 36 (Figur 1) geschlossen ist. In Abhängigkeit von der Verschwenkung des Bremspedals 2 wird somit die Regelfederanordnung 20 gespannt, entsprechend stellt sich der Regelkolben 18 des Bremsventils 6 in seine Regelposition ein, in der der Bremsanschluss BR mit dem Hydrospeicher 14 verbunden ist. Der am Bremsanschluss abgegebene Druck wird abgegriffen und - wie vorbeschrieben - über den Steuerkanal 34 und den Steueranschluss 82, die Schrägbohrung 96, die Ringnut 94 und die Radialbohrung 92 in den Steuerraum 104 des anderen Bremsventils 8 gemeldet. Durch den im Steuerraum 104 anliegenden Bremsdruck wird der Steuerkolben 28 nach unten verschoben (Figur 2) und entsprechend der Federteller 78 vom Vorsteuergehäuse 68 abgehoben und auch der Regelkolben 18 des anderen Bremsventils 8 in eine Regelposition verschoben, so dass auch die diesem Kreis zugeordneten Radbremszylinder 12 mit Druckmittel versorgt werden. Die Stirnfläche des Steuerkolbens 28 ist so gewählt, dass die sich einstellende Auslenkung derjenigen entspricht, die sich bei dem direkt durch das Bremspedal 2 betätigten Bremsventils 6 einstellt. Durch den Druck im Steuerraum 38 wird der Hauptkolben 26 nach oben beaufschlagt, so dass dieser in seiner Grundposition verbleibt und der Steuerkolben 28 aus dem Hauptkolben 26 heraus ausfährt - die Verbindung zwischen dem Steuerraum 104 und dem Steueranschluss 82 bleibt somit beim anderen Bremsventil 8 geöffnet.

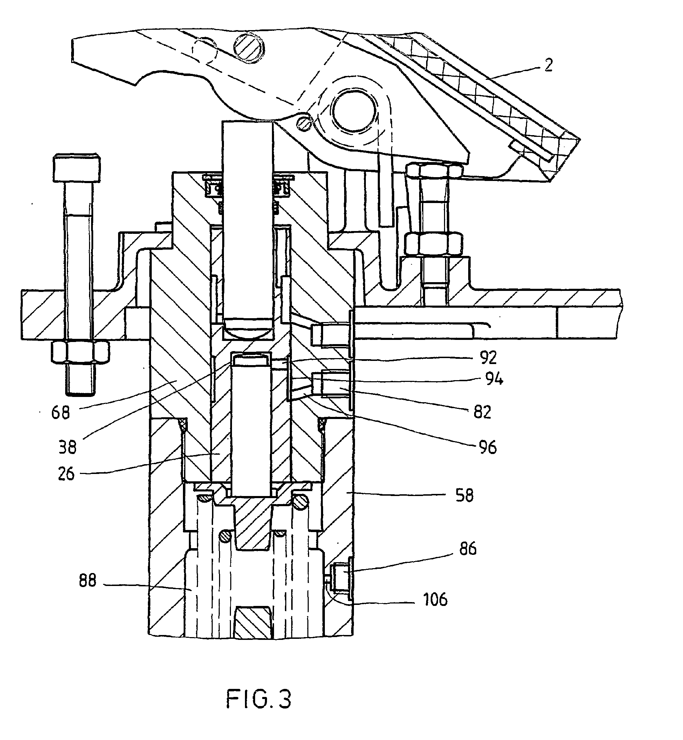

In Figur 3 ist eine Variante des in Figur 2 dargestellten Ausführungsbeispiels gezeigt. Bei dieser Konstruktion wurde auf die Zweiwegeventile 42, 44 verzichtet. Diese Änderung wurde alleine dadurch bewirkt, dass die Ringnut 94 des Hauptkolbens 26 mit einer größeren Axiallänge als beim vorbeschriebenen Ausführungsbeispiel ausgeführt ist, so dass während des gesamten Hubs des Hauptkolbens 26 die Verbindung zwischen dem Steuerraum 38 und dem Steueranschluss 82 aufgesteuert bleibt. D.h. in diesem Fall wirkt bei beiden Bremsventilen 6, 8 im jeweiligen Steuerraum 38 der Bremsdruck am Bremsanschluss BR des jeweils anderen Bremsventils 8, 6. Bei demjenigen Bremsventil 6, das mittels des Bremspedals 2, 4 betätigt ist, kann dieser Steuerdruck unter Umständen störend auf die über das Bremspedal 2 eingeleitete Pedalkraft wirken - derartige Wechselwirkungen sind bei dem in Figur 2 dargestellten Ausführungsbeispiel ausgeschlossen.

Durch Betätigung des Druckreduzierventils 54 kann über die beiden an die Vorsteueranschlüsse 84 der Bremsventile 6, 8 angeschlossenen Vorsteuerkanäle 50, 52 ein vorbestimmter Steuerdruck an die Steuerräume 46 der Bremsventile 6, 8 angelegt werden, so dass der Hauptkolben 26 durch den auf seine gesamte Stirnfläche wirkenden Druck gegen die Kraft der Federanordnung 20 nach unten verschoben wird und der Regelkolben 18 in eine dem Druck entsprechende Regelposition verschoben wird. Diese Betätigung der Bremsventile 6, 8 kann alleine aufgrund eines Vorsteuerdruckes über das Druckreduzierventil erfolgen.

Bei dem in Figur 3 dargestellten Ausführungsbeispiel ist des weiteren der Tankanschluss 86 zur Druckentlastung des Federraumes 88 nicht am Vorsteuergehäuse 68, sondern direkt am Bremsventilgehäuse 58 ausgebildet und über eine Querbohrung 106 mit dem Federraum 88 verbunden.

Offenbart ist ein Bremssystem für eine mobile Arbeitsmaschine, beispielsweise für einen Radlader, mit zwei hydraulischen Kreisen, denen jeweils zumindest ein Radbremszylinder zugeordnet ist. Die Ansteuerung der Radbremszylinder erfolgt über eine Bremsventilanordnung, die erfindungsgemäß durch zwei Bremsventile gebildet ist, die jeweils mit einer hydraulischen Vorsteuerung ausgeführt sind, wobei der Bremsdruck an dem einen Bremsventil über eine Steuerleitung in einen Vorsteuerraum des anderen Bremsventils gemeldet ist.

### Bezugszeichenliste

- 1: Bremssystem
- 2: Bremspedal
- 4: Bremspedal
- 6: Bremsventil
- 8: Bremsventil
- 10: Radbremszylinder
- 12: Radbremszylinder
- 14: Hydrospeicher
- 16: Hydrospeicher
- 18: Regelkolben
- 20: Regelfederanordnung
- 22: Betätigungseinrichtung
- 24: Betätigungseinrichtung
- 26: Hauptkolben
- 28: Steuerkolben
- 30: Steuerleitung
- 32: Tankleitung
- 34: Steuerleitung
- 36: Steuerleitung
- 38: Steuerraum
- 40: Steuerraum
- 42: Zweiwegeventil
- 44: Zweiwegeventil
- 48: Vorsteuerraum
- 49: Vorsteuerraum
- 50: Vorsteuerkanal
- 52: Vorsteuerkanal
- 54: Druckreduzierventil
- 56: Hydrospeicher
- 58: Bremsventilgehäuse
- 60: Bremsventilkopf
- 62: Konsole
- 64: Torsionsfeder
- 66: Befestigungspin
- 68: Vorsteuergehäuse
- 70: Axialbohrung
- 74: Sacklochbohrung
- 76: Führungsbohrung
- 78: Federteller
- 80: Regelfeder
- 81: innen liegende Regelfeder
- 82: Steueranschluss
- 84: Vorsteueranschluss
- 86: Tankanschluss
- 88: Federraum
- 90: Steuerraum
- 92: Radialbohrung
- 94: Ringnut
- 96: Schrägbohrung
- 98: Längsbohrung
- 99: Querbohrung
- 100: Umfangsnut
- 102: weitere Schrägbohrung
- 104: Steuerkante
- 106: Querbohrung

## Patentansprüche

1. Bremssystem für eine mobile Arbeitsmaschine, mit zwei hydraulischen Kreisen, denen jeweils zumindest ein Radbremszylinder (10, 12) und ein Bremsventil (6, 8) zugeordnet sind, von denen jedes Bremsventil über jeweils ein Bremspedal (2, 4) und eine hydraulische Vorsteuerung betätigbar ist, wobei jeweils der Druck stromabwärts des betätigten Bremsventils (6, 8) in den diesem zugeordneten Radbremszylinder (10, 12) und über einen Steuerkanal (34, 36) in einen Steuerraum (38, 40) des anderen Bremsventils (6, 8) geführt ist.

2. Bremssystem nach Patentanspruch 1, wobei die Bremspedale (2, 4) jeweils über einen Betätigungskolben (26, 28) auf eines der Bremsventile (6, 8) wirken.

3. Bremssystem nach Patentanspruch 1 oder 2, wobei im Steuerkanal (34, 36) ein Wegeventil (42, 44) vorgesehen ist, über das die Verbindung zum Steuerraum (38, 40) in Abhängigkeit von der Betätigung der Betätigungseinrichtung (22, 24) absperrbar ist.

4. Bremssystem nach Patentanspruch 3, wobei das Wegeventil (42, 44) durch das Bremspedal (2, 4) oder den Betätigungskolben (26, 28) betätigbar ist.

5. Bremssystem nach einem der vorhergehenden Patentansprüche, wobei ein Vorsteuerraum (48, 49) der Bremsventile (6, 8) mit einem Vorsteuerdruck beaufschlagbar ist.

6. Bremssystem nach Patentanspruch 5, wobei der Vorsteuerdruck über ein Druckreduzierventil (54) auf ein vorbestimmtes Niveau vermindert ist.

7. Bremssystem nach Patentanspruch 2 und nach Patentanspruch 5 oder 6, wobei die Betätigungskolben zweiteilig mit einem Hauptkolben (26) und einem in diesem geführten Steuerkolben (28) ausgeführt sind, und der Vorsteuerdruck auf den Vorsteuerraum (48, 49) abschnittsweise begrenzenden Hauptkolben (26) und der dem Bremsdruck entsprechende Steuerdruck auf den den Steuerraum (38, 40) abschnittsweise begrenzenden Steuerkolben (28) wirkt.

8. Bremssystem nach Patentanspruch 7, wobei der Steuerraum (38, 40) über eine Mantelbohrung (92) des Hauptkolbens (26) mit einem mit dem Steuerkanal (34, 36) verbundenen Steueranschluss (82) verbunden ist.

9. Bremssystem nach Patentanspruch 8 und 3, wobei der Steueranschluss (82) durch eine Steuerkante (104) des Hauptkolbens (26) zusteuerbar ist.

10. Bremssystem nach Patentanspruch 9, wobei die Steuerkante (104) an einer Ringnut (94) des Hauptkolbens (26) ausgebildet ist.

11. Bremssystem nach einem der Patentansprüche 7 bis 10, wobei der Vorsteuerraum (48, 49) durch den Hauptkolben (26) hindurch mit einem mit dem Druckreduzierventil (54) verbundenen Vorsteueranschluss (84) verbunden ist.

12. Bremssystem nach Patentanspruch 2 oder einen auf Patentanspruch 2 bezogenen Patentanspruch, wobei der Betätigungskolben (26, 28) in einem Vorsteuergehäuse (68) des Bremsventils (6, 8) aufgenommen ist.

13. Bremssystem nach Patentanspruch 7 oder einen auf Patentanspruch 7 bezogenen Patentanspruch, wobei ein vom Bremspedal (2, 4) beaufschlagbarer Betätigungspin (66) mit Spiel in den Hauptkolben (26) eingesetzt ist.

14. Bremssystem nach einem der vorhergehenden Patentansprüche, **dadurch gekennzeichnet, dass** ein eine Regelfederanordnung (20) des Bremsventils (6, 8) aufnehmender Federraum (88) mit einem Tankanschluss (86) verbunden ist.

## Claims

1. A brake system for a mobile machine, comprising two hydraulic circuits to each of which at least one wheel brake cylinder (10, 12) and one brake valve (6, 8) are associated, of which each brake valve is adapted to be respectively controlled through the intermediary of one brake pedal (2, 4) and one hydraulic pilot control, wherein the respective pressure downstream of the actuated brake valve (6, 8) is conducted into the wheel brake cylinder (10, 12) associated to the latter and via a control passage (34, 36) into a control chamber (38, 40) of the other brake valve (8, 6).

2. The brake system in accordance with claim 1, wherein the brake pedals (2, 4) each act on one of the brake valves (6, 8) via a respective actuation piston (26, 28).

3. The brake system in accordance with claim 1 or 2, wherein in the control passage (34, 36) a directional control valve (42, 44) is provided whereby the connection with the control chamber (38, 40) may be blocked in accordance with operation of the operating means (22, 24).

4. The brake system in accordance with claim 3, wherein the directional control valve (42, 44) is adapted to be operated through the brake pedal (2, 4) or the actuation piston (26, 28).

5. The brake system in accordance with any one of the preceding claims, wherein a pilot control chamber (48, 49) of the brake valves (6, 8) is adapted to be subjected to a pilot control pressure.

6. The brake system in accordance with claim 5, wherein the pilot control pressure is reduced to a predetermined level through the intermediary of a pressure reducing valve (54).

7. The brake system in accordance with claim 2 and 5 or 6, wherein the actuation piston is executed in two parts with a main piston (26) and a control piston (28) guided therein, with the pilot control pressure acting on the main piston (26) defining a pilot control chamber (48, 49) in portions thereof, and the control pressure corresponding to the braking pressure acting on the control piston (28) defining the control chamber (38, 40) in portions thereof.

8. The brake system in accordance with claim 7, wherein the control chamber (38, 40) is connected through a jacket bore (92) of the main piston (26) with a control port (82) that is connected with the control passage (34, 36).

9. The brake system in accordance with claim 8 and 3, wherein the control port (82) is adapted to be closed by a control edge (104) of the main piston (26).

10. The brake system in accordance with claim 9, wherein the control edge (104) is formed on an annular groove (94) of the main piston (26).

11. The brake system in accordance with any one of claims 7 to 10, wherein the pilot control chamber (48, 49) is connected through the main piston (26) with a pilot control port (84) that is connected with the pressure reducing valve (54).

12. The brake system in accordance with claim 2 or a claim appended to claim 2, wherein the actuation piston (26, 28) is received in a pilot control housing (68) of the brake valve (6, 8).

13. The brake system in accordance with claim 7 or a claim appended to claim 7, wherein an actuation pin (66) adapted to be acted upon by the brake pedal (2, 4) is inserted with play in the main piston (26).

14. The brake system in accordance with any one of the preceding claims, **characterized in that** a spring chamber (88) receiving a regulating spring arrangement (20) of the brake valve (6, 8) is connected with a tank port (86).

## Revendications

1. Système de freinage pour une machine de travail mobile avec deux circuits hydrauliques, auxquels respectivement au moins un cylindre de frein de roue (10, 12) et une soupape de frein (6, 8) sont associés, dont chaque soupape de frein peut être actionnée respectivement via une pédale de frein (2, 4) et une commande pilote hydraulique, dans lequel la pression est conduite respectivement en aval de la soupape de frein (6, 8) actionnée dans le cylindre de frein de roue (10, 12) associé à celle-ci et par le biais d'un canal de commande (34, 36) dans une chambre de commande (38, 40) de l'autre soupape de frein (6, 8).

2. Système de freinage selon la revendication 1, dans lequel les pédales de frein (2, 4) agissent respectivement par le biais d'un piston d'actionnement (26, 28) sur une des soupapes de frein (6, 8).

3. Système de freinage selon la revendication 1 ou 2, dans lequel un distributeur (42, 44) est prévu dans le canal de commande (34, 36), par le biais duquel distributeur la liaison à la chambre de commande (38, 40) peut être fermée en fonction de l'actionnement du dispositif d'actionnement (22, 24).

4. Système de freinage selon la revendication 3, dans lequel le distributeur (42, 44) peut être actionné par la pédale de frein (2, 4) ou le piston d'actionnement (26, 28).

5. Système de freinage selon l'une quelconque des revendications précédentes, dans lequel une chambre de commande pilote (48, 49) des soupapes de frein (6, 8) peut être alimentée en pression de commande pilote.

6. Système de freinage selon la revendication 5, dans lequel la pression de commande pilote est ramenée à un niveau prédéfini par le biais d'un détendeur (54).

7. Système de freinage selon la revendication 2 et selon la revendication 5 ou 6, dans lequel les pistons d'actionnement sont réalisés en deux parties avec un piston principal (26) et un piston de commande (28) guidé dans celui-ci et la pression de commande pilote agit sur le piston principal (26) délimitant par zones la chambre de commande pilote (48, 49) et la pression de commande correspondant à la pression de freinage agit sur le piston de commande (28) délimitant par zones la chambre de commande (38, 40).

8. Système de freinage selon la revendication 7, dans lequel la chambre de commande (38, 40) est reliée à un raccord de commande (82) relié au canal de commande (34, 36) par le biais d'un alésage de l'enveloppe (92) du piston principal (26).

9. Système de freinage selon les revendications 8 et 3, dans lequel la fermeture du raccord de commande (82) peut être commandée par un bord de commande (104) du piston principal (26).

10. Système de freinage selon la revendication 9, dans lequel le bord de commande (104) est réalisé au niveau d'une rainure annulaire (94) du piston principal (26).

11. Système de freinage selon l'une quelconque des revendications 7 à 10, dans lequel la chambre de commande pilote (48, 49) est reliée à un raccord de commande pilote (84) relié au détendeur (54) à travers le piston principal (26).

12. Système de freinage selon la revendication 2 ou une revendication se rapportant à la revendication 2, dans lequel le piston d'actionnement (26, 28) est logé dans un boîtier de commande pilote (68) de la soupape de frein (6, 8).

13. Système de freinage selon la revendication 7 ou une revendication se rapportant à la revendication 7, dans lequel une broche d'actionnement (66) pouvant être sollicitée par la pédale de frein (2, 4) est insérée avec jeu dans le piston principal (26).

14. Système de freinage selon l'une quelconque des revendications précédentes, **caractérisé en ce qu'**une chambre à ressort (88) recevant un agencement de ressort de réglage (20) de la soupape de frein (6, 8) est reliée à un raccord de réservoir (86).
